(19) Europäisches Patentamt
European Patent Office
Office européen des brevets

(11) **EP 3 589 898 B1**

(12) **EUROPÄISCHE PATENTSCHRIFT**

(45) Veröffentlichungstag und Bekanntmachung des Hinweises auf die Patenterteilung:
**20.09.2023   Patentblatt 2023/38**

(21) Anmeldenummer: **18713795.5**

(22) Anmeldetag: **28.02.2018**

(51) Internationale Patentklassifikation (IPC):
**F24D 19/10** *(2006.01)*     **F04B 49/20** *(2006.01)*

(52) Gemeinsame Patentklassifikation (CPC):
**F24D 19/1012; F04D 15/0066;** F24D 2220/0207;
Y02B 30/70

(86) Internationale Anmeldenummer:
**PCT/EP2018/054882**

(87) Internationale Veröffentlichungsnummer:
**WO 2018/158292 (07.09.2018 Gazette 2018/36)**

(54) **VERFAHREN ZUR REGELUNG EINER DREHZAHLVARIABLEN UMWÄLZPUMPE SOWIE UMWÄLZPUMPE**

METHOD FOR CONTROLLING A VARIABLE-ROTATIONAL-SPEED CIRCULATION PUMP, AND CIRCULATION PUMP

PROCÉDÉ POUR RÉGLER UNE POMPE DE CIRCULATION À VITESSE DE ROTATION VARIABLE ET POMPE DE CIRCULATION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **03.03.2017   DE 102017203474**

(43) Veröffentlichungstag der Anmeldung:
**08.01.2020   Patentblatt 2020/02**

(73) Patentinhaber: **KSB SE & Co. KGaA
67227 Frankenthal (DE)**

(72) Erfinder: **ECKL, Martin
67227 Frankenthal (DE)**

(56) Entgegenhaltungen:
**EP-A1- 1 933 097     EP-A1- 2 708 825
EP-A1- 3 026 352     DE-A1-102011 012 211**

**Beschreibung**

Die Erfindung betrifft ein Verfahren zur Regelung einer Umwälzpumpe mit variabler Drehzahl in einer hydraulischen Anlage, insbesondere einer Heizungsanlage, sowie eine Umwälzpumpe zur Ausführung des Verfahrens.

Ältere Heizungsumwälzpumpen, insbesondere für Heizungsanlagen kleiner oder mittlerer Leistung, sind oftmals ungeregelt, d.h. deren Leistung muss manuell auf die jeweilige Leistungsanforderung der Heizungsanlage eingestellt werden. Die Pumpe bietet hierzu unterschiedliche Leistungsstufen zur manuellen Auswahl an. Erfolgt keine manuelle Anpassung der Leistungsstufe innerhalb der Heizungsanlage, muss eine ausreichend hohe Leistungsstufe ausgewählt werden, die auch in Zeiten auftretender Leistungsspitzen einen ausreichenden Förderstrom zur Verfügung stellen kann. Da diese Leistungsspitzen nur kurzzeitig auftreten, läuft die Pumpe überwiegend in einem energetisch ungünstigen Betrieb.

Aufgrund strenger werdender Energieeffizienzanforderungen sind moderne Umwälzpumpen mit Umrichter und Drehzahlregler ausgestattet, die eine Einstellung der Drehzahl anhand einer Regelkennlinie ermöglichen. Für einen energetisch günstigen Betrieb ist es wünschenswert, dass die verwendete Regelkennlinie möglichst nahe an der minimalen Anlagenkennlinie der Heizungsanlage liegt. Die Anlagenkennlinie ändert sich mit dem Öffnungsgrad der Thermostatventile der einzelnen Heizkörper. Der Betriebspunkt ist der Schnittpunkt zwischen der Regelkennlinie der Pumpe und der aktuellen Anlagenkennlinie. Die minimale Anlagenkennlinie liegt vor, wenn die Thermostatventile an den einzelnen Heizungskörpern vollständig geöffnet sind. Eine unterhalb der minimalen Anlagenkennlinie liegende Regelkennlinie würde zu einer Unterversorgung der Anlage führen, da die Pumpe die erforderliche Pumpenleistung nicht mehr erbringen kann. Eine weitere Schwierigkeit liegt darin, dass die exakte minimale Anlagenkennlinie oftmals unbekannt ist und nur grob abgeschätzt werden kann. In der Praxis wird dann häufig auf eine proportionale oder parabelförmige Regelkennlinie zurückgegriffen, die in ausreichendem Abstand oberhalb der minimalen Anlagenkennlinie liegt, um stets ein ausreichendes Leistungspolster zu haben. Dieser Abstand zwischen Anlagen- und Regelkennlinie ist jedoch ein Kennwert für die überschüssige Leistung der Pumpe und somit für das vorhandene Energieeinsparungspotenzial derartiger Pumpen, denn um diesen Betrag übersteigt die gefahrene Leistung der Pumpe den eigentlichen Energiebedarf der Heizungsanlage.

Die DE 10 2011 012211 A1 beschreibt ein Verfahren zum leistungsoptimierten Betreiben einer elektromotorisch angetriebenen Pumpe in einem hydraulischen System. Dabei wird der von der Pumpe geförderte Volumenstrom bestimmt und dessen Trend ermittelt, wobei in Abhängigkeit des Volumenstroms und/oder dessen Trends der Kennliniensollwert erhöht wird, wenn der Volumenstrom steigt, oder reduziert wird, wenn der Volumenstrom sinkt.

Die EP 3 026 352 A1 beschreibt ein Verfahren zur hydraulischen Regelung mehrerer, parallel geschalteter Fluidkreisläufe mit jeweils einer drehzahlvariablen Pumpe.

Aus dem Stand der Technik sind verschiedene Lösungsansätze für die Optimierung der Regelkennlinie zur Energieeinsparung bekannt. Hierbei soll mittels speziellem Lernalgorithmus unmittelbar nach Inbetriebnahme der Pumpe eine automatische Anpassung der Regelkennlinie an die vorliegende Charakteristik der Heizungsanlage erfolgen. Berücksichtigt wird neben den hydraulischen Eigenschaften der Anlage auch das Verbraucherverhalten des individuellen Anlagenbetreibers. Diese Faktoren werden während einer länger andauernden Lernphase beobachtet. Im Anschluss wird unter Berücksichtigung der gewonnenen Erkenntnisse eine angepasste Regelkennlinie erstellt, die nachfolgend als feste Regelkennlinie für den regulären Heizungsbetrieb bzw. Umwälzbetrieb eingesetzt wird.

Das vorbekannte Verfahren ermöglicht zwar eine zufriedenstellende Energieeinsparung im Pumpenbetrieb, benötigt jedoch einen vergleichsweise komplexen Softwarealgorithmus inklusive entsprechender Hardware. Ein weiterer Nachteil besteht darin, dass auch bei diesem Verfahren eine kurzfristige Unterversorgung der hydraulischen Anlage nicht auszuschließen ist, da bei einer möglichen Fehlinterpretation der hydraulischen Anlageneigenschaften bzw. der Signale innerhalb der hydraulischen Anlage eine fehlerhafte Regelkennlinie zu einer Unterversorgung führen kann.

Die Idee der vorliegenden Anmeldung besteht darin, ein alternatives Verfahren aufzuzeigen, das einen energiesparsamen Betrieb einer Umwälzpumpe erlaubt, gegenüber den Lösungen aus dem Stand der Technik deutlich einfacher ausgestaltet ist und zudem temporäre Unterversorgungen möglichst zuverlässig ausschließen kann.

Gelöst wird diese Aufgabe durch ein Verfahren gemäß den Merkmalen des Anspruchs 1. Vorteilhafte Ausgestaltungen des Verfahrens sind Gegenstand der sich an den Hauptanspruch anschließenden abhängigen Ansprüche.

Gemäß Anspruch 1 wird ein Verfahren zur Regelung einer Umwälzpumpe mit variabler Drehzahl in einer hydraulischen Anlage vorgeschlagen. Die hydraulische Anlage ist beispielsweise ein Heizungskreislauf einer Heizungsanlage. Die Umwälzpumpe ist typischerweise eine Kreiselpumpe und dient hierbei zur Umwälzung des Heizungswassers innerhalb des Heizungskreislaufs. Bei der Umwälzpumpe kann es sich um eine Heizungsumwälzpumpe für kleine bis mittlere Heizungsanlagen, die vorzugsweise in Einfamilienhäusern bzw. kleineren Mehrfamilienhäusern zum Einsatz kommt, handeln. Das Verfahren lässt sich jedoch auch für Heizungsumwälzpumpen verwenden, die in großen Gebäuden wie Flughäfen, Hochhäusern, Fabriken, Bürogebäuden eingebaut werden. Da größere Gebäude in der Regel ein thermisch trägeres Verhalten haben und folglich ein konstanter Betriebspunkt dort öfter auftritt, ist die Anwendung des Verfahrens gerade dort sehr effektiv.

Das erfindungsgemäße Verfahren zeichnet sich durch die folgenden wesentlichen Verfahrensschritte aus. Bei Inbetriebnahme der Pumpe wird zunächst eine Regelung der Umwälzpumpe gemäß einer gespeicherten statischen Regelkennlinie ausgeführt. Diese Regelkennlinie kann eine Gerade sein, idealerweise eine proportionale Kennlinie, oder alternativ einen parabelförmigen Kurvenverlauf haben. Abweichende Kurvenformen sind ebenso denkbar.

Im laufenden Betrieb wird der Förderstrom der Umwälzpumpe erfasst, insbesondere gemessen. Eine unmittelbare Messung des Förderstroms ist vorteilhaft, jedoch ist auch eine mittelbare Messung des Förderstroms denkbar, indem dieser von alternativen messbaren Pumpenparametern abgeleitet wird. Anhand des wenigstens einen gemessenen Parameters, d.h. des Förderstromes, soll ein stationärer Betriebspunkt der hydraulischen Anlage erkannt werden. Ein entsprechender stationärer Betriebspunkt kann sich dadurch auszeichnen, dass über einen bestimmten Zeitraum keine Änderung oder nur geringfügige Änderungen der oder des erfassten physikalischen Parameters, insbesondere des Förderstroms, feststellbar ist. Gemäß dem erfindungsgemäßen Verfahren wird in diesem Fall der Pumpenbetrieb auf eine dynamische Regelkennlinie umgeschaltet. Die in diesem Zustand verwendete Regelkennlinie wird im regulären Pumpenbetrieb laufend dynamisch angepasst, um den Energiebedarf der Umwälzpumpe abzusenken.

Besonders bevorzugt ist es, wenn von der dynamischen Regelkennlinie auf die gespeicherte statische Regelkennlinie zurückgeschaltet wird, falls der Förderstrom unter einen definierten Grenzwert abfällt oder aus einem definierten Grenzbereich herausfällt. Dies kann der Fall sein, wenn sich der stationäre Betriebspunkt der Anlage ändert, sei es durch Verbraucherverhalten oder einen sonstigen Einflussfaktor, oder aber die Pumpenleistung während des dynamischen Betriebes zu weit abgesenkt wurde und unterhalb die Anlagenkennlinie, insbesondere die minimale Anlagenkennlinie fällt. Während des dynamischen Betriebs wird also die Leistung der Umwälzpumpe ständig abgesenkt, insbesondere unter gleichzeitiger Überwachung des resultierenden Förderstroms der Umwälzpumpe. Durch ein sofortiges Rückschalten auf die statische Regelkennlinie wird eine temporäre Unterversorgung der Anlage zuverlässig vermieden.

Der Grenzwert bzw. Grenzbereich des Förderstroms wird idealerweise durch den Förderstrom definiert, der im Zeitpunkt des Erkennens eines stationären Betriebspunktes der Anlage vorliegt. Bleibt also der Förderstrom der Umwälzpumpe über einen bestimmten Zeitraum konstant, wird nicht nur ein stationärer Betriebspunkt angenommen, sondern sogleich der festgestellte Förderstrom als Grenzwert bzw. zur Definition des Grenzbereiches für den dynamischen Betrieb der Umwälzpumpe herangezogen. Der Grenzbereich lässt sich beispielsweise dadurch definieren, dass der bestimmte Förderstrom mit einer tolerierbaren Abweichung nach oben bzw. unten angenommen wird.

Die dynamische Regelkennlinie basiert besonders bevorzugt auf einer dynamischen Absenkung der Pumpendrehzahl, wodurch der Leistungsbedarf bzw. Energiebedarf der Umwälzpumpe reduziert werden kann. Insbesondere kann dies durch eine kontinuierliche Absenkung der Pumpendrehzahl erfolgen. Die Absenkung der Pumpendrehzahl erfolgt idealerweise verhältnismäßig langsam. Auch ein stufenartiges oder periodisches Absenken der Pumpendrehzahl ist umsetzbar.

Gemäß einer bevorzugten Ausgestaltung des Verfahrens wird die durch die Drehzahlabsenkung bedingte Änderung des Pumpenförderstroms durch das Öffnen der Thermostatventile der Heizkörper ausgeglichen. Die Aufgabe der Thermostatventile besteht darin, die Raumtemperatur konstant zu halten, d.h. die am Ventil eingestellte Wunschtemperatur zu halten. Auf das Absinken der Pumpendrehzahl werden die einzelnen Thermostatventile folglich durch ein Öffnen ihrer Ventilstellung antworten, um trotz abnehmender Fördermenge die Temperatur halten zu können. Demzufolge können die einzelnen Thermostatventile durch die Drehzahlreduzierung der Umwälzpumpe zum Öffnen gezwungen werden, wodurch die aktuelle Anlagenkennlinie der minimalen Anlagenkennlinie (bei vollständig geöffneten Thermostatventilen) angenähert wird. Dies erlaubt einen deutlich energiesparsameren Betrieb der Heizungsumwälzpumpe.

Die Absenkdynamik der Pumpendrehzahl ist idealerweise so gewählt, dass die Drehzahl so langsam abgesenkt wird, dass die Thermostatventile schneller öffnen und somit die Raumtemperatur konstant bleibt.

Durch die idealerweise nahezu synchrone Öffnung der Thermostatventile zur Drehzahlreduktion kann trotz Drehzahlabsenkung ein konstanter Pumpenförderstrom erreicht werden.

Es ist jedoch auch vorstellbar, die einzelnen Ventile bzw. zumindest einen Teil der Thermostatventile direkt anzusteuern, um die entsprechende Öffnungsstellung zur Erreichung der minimalen Anlagenkennlinie vorzugeben.

Im Fall eines Umschaltens der Umwälzpumpe auf die statische Regelkennlinie wird bevorzugt die Drehzahländerung zurückgenommen. Die Thermostatventile werden als Reaktion entsprechend schließen. Beispielsweise wird die Drehzahl der Umwälzpumpe mit den initialen Einstellparametern gefahren, die bei der Inbetriebnahme mit der statischen Regelkennlinie eingestellt worden sind.

Vorstellbar ist auch ein Zurückspringen auf einen Zwischenwert, d.h. die Drehzahl wird nicht auf die durch die statische Regelkennlinie vorgegebene Drehzahl zurückgesetzt, sondern auf einen Zwischenwert der zwischen der Drehzahl der statischen Regelkennlinie und der zuletzt gefahrenen Drehzahl liegt.

Ein stationärer Betriebspunkt der hydraulischen Anlagen wird beispielsweise dadurch erkannt, dass der bestimmte, insbesondere gemessene Förderstrom für eine bestimmte Zeitdauer t innerhalb eines bestimmten Bereichs $\Delta Q$ des Förderstroms liegt. Der Bereich $\Delta Q$ entspricht dem definierten Grenzbereich, der während des dynamischen Regelkennlinienbetriebs überwacht wird. Um kurzfristige Ausschläge des Förderstromsignals Q aufgrund von Messfehlern zu eliminieren, wird das Signal mit einem Tiefpass erster Ordnung gefiltert.

Besonders zweckmäßig ist es, wenn sich sowohl die Zeitdauer t als auch der Bereich ΔQ, d.h. der Abstand der Bereichsgrenzen, manuell und/oder automatisch adaptieren lässt.

Neben dem erfindungsgemäßen Verfahren betrifft die vorliegende Anmeldung zudem eine Umwälzpumpe, insbesondere eine Heizungsumwälzpumpe, mit einer integrierten Steuerung zur Durchführung des erfindungsgemäßen Verfahrens bzw. einer vorteilhaften Ausgestaltung des erfindungsgemäßen Verfahrens. Folglich ergeben sich für die Umwälzpumpe dieselben Vorteile und Eigenschaften, wie sie bereits vorstehend anhand des erfindungsgemäßen Verfahrens aufgezeigt wurden. Auf eine wiederholende Beschreibung wird aus diesem Grund verzichtet.

Weitere Vorteile und Eigenschaften der Erfindung sollen mit Hilfe von zwei Figuren näher erläutert werden. Es zeigen:

Figur 1:  Diagrammdarstellungen einzelner Pumpen- bzw. Anlagenparameter während der Ausführung des erfindungsgemäßen Verfahrens,

Figur 2:  eine Diagrammdarstellung der Anlagen- und Regelkennlinie mit dynamischer Absenkung und

Figur 3:  eine Diagrammdarstellung des zeitlichen Förderstroms zur Verdeutlichung des Lastprofils eines beispielhaften Gebäudes.

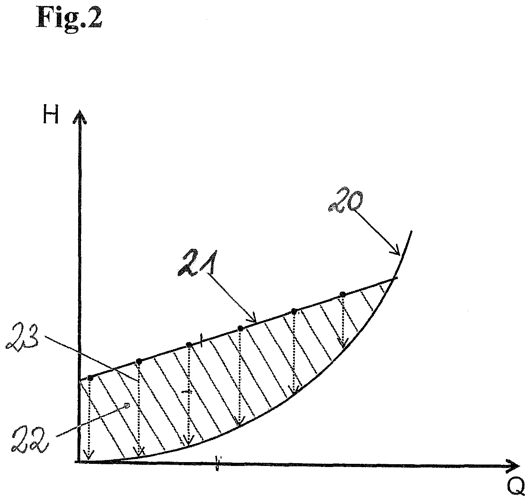

Die innovative Idee der vorliegenden Erfindung basiert auf dem Einsatz einer dynamischen Regelkennlinie anstatt einer wie bei konventionellen Umwälzpumpen eingesetzten statischen Regelkennlinie. Nach dem Einschalten der Umwälzpumpe wird zunächst eine statische Regelkennlinie eingesetzt, welche beispielsweise die in Figur 2 dargestellte proportionale Regelkennlinie 21 sein kann. Gleichzeitig wird der Förderstrom Q permanent überwacht. Bleibt dieser Förderstrom Q während einer zu definierenden Dauer t1 innerhalb einer zu definierenden Grenze ΔQ, wird von einem stationären Betriebspunkt ausgegangen. In diesem Fall wird die Drehzahl n der Umwälzpumpe sehr langsam abgesenkt und dadurch die Energieeffizienz der Pumpe erhöht. Das mit dem Absenken der Drehzahl n zusammenhängende Absenken des Förderstroms Q wird durch die Armaturen korrigiert. Da das Absenken der Drehzahl n sehr langsam erfolgt, wird der Verbraucher diese Maßnahme nicht spüren und der Förderstrom Q innerhalb der definierten Grenze ΔQ bleiben. Fällt der Förderstrom Q jedoch aus dem Bereich ΔQ heraus, wird die Drehzahlabsenkung zurückgenommen und die statische Regelkennlinie stattdessen eingesetzt. Dies kann beispielsweise der Fall sein, wenn die Regelkennlinie unter die minimale Anlagenkennlinie abgesenkt wurde bzw. sich das Verhalten des Verbrauchers ändert, indem dieser ein Fenster bzw. eine Tür des beheizten Raumes öffnet oder aber eines der Heizventile betätigt.

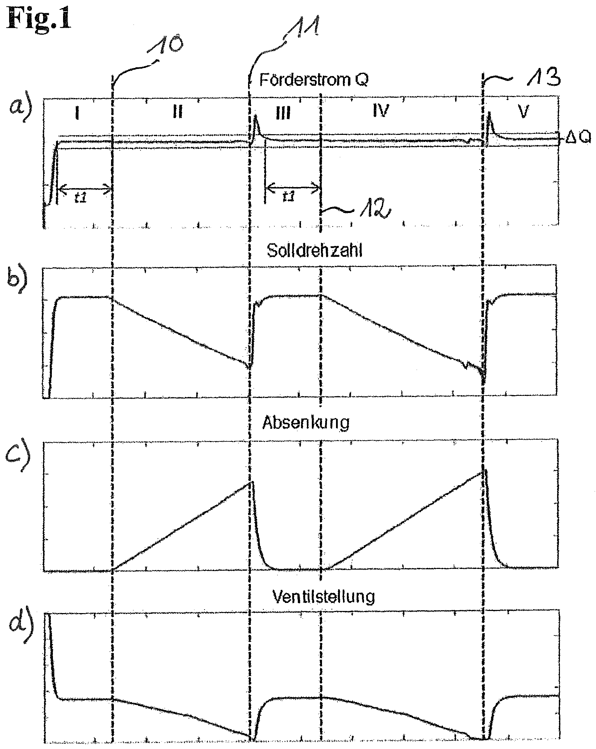

Mit Hilfe der in Figur 1 gezeigten Diagrammdarstellungen des zeitlichen Verlaufs unterschiedlicher Anlagen- und Pumpenparameter soll der Ablauf des erfindungsgemäßen Verfahrens veranschaulicht werden. Im Einzelnen zeigt das Diagramm a) den gemessenen Förderstrom Q über die Dauer t, das Diagramm b) visualisiert die aktuelle Solldrehzahl n der Umwälzpumpe über die Dauer t. Das Diagramm c) steht für die vorgenommene Drehzahlabsenkung der Umwälzpumpe über die Zeit t und das Diagramm d) zeigt die gewählte Ventilstellung über die Zeit t.

Vorausgeschickt sei an dieser Stelle, dass die dargestellten Verläufe von einem durchgehend stationären Betriebspunkt der Anlage ausgehen. Nach dem Einschalten im Zeitpunkt t=0 regelt die Pumpensteuerung den Förderstrom Q auf seinen Sollwert gemäß der verwendeten statischen Regelkennlinie. Nach dem Erreichen des Sollwertes bleibt dieser wie die Drehzahl der Pumpe konstant. Dieses Zeitfenster ist in der Darstellung der Figur 1 als Bereich I gekennzeichnet.

Nach dem Erreichen des Sollförderstroms Q wird dieser kontinuierlich erfasst und überwacht. Bleibt der gemessene Förderstrom Q über den Zeitraum t1 konstant, geht die Umwälzpumpe von einem stationären Betriebspunkt der Anlage aus. Aufgrund der konstanten Drehzahl n, bedingt durch die statische Regelkennlinie, liegt der Wert der Absenkung im Diagramm c) während des Zeitfensters I bei null. Zudem stellt sich das Thermostatventil des oder der Heizkörper auf einen Öffnungsgrad ein, der zum Erreichen des Sollförderstroms Q führt.

Im Zeitpunkt 10 wird nach Ablauf der Zeit t1 ein stationärer Betriebspunkt erkannt. In diesem Moment schaltet die Steuerung der Umwälzpumpe auf einen Betrieb mit dynamischer Regelkennlinie um. Der dynamische Regelbetrieb findet im Zeitfenster II statt, wobei der Wert der Absenkung langsam erhöht und die Solldrehzahl n der Umwälzpumpe kontinuierlich um den gleichen Wert reduziert wird. Da das oder die Ventile der Heizkörper auf eine konstante Temperatur regeln, wird das Absenken der Solldrehzahl n durch eine Vergrößerung der Ventilöffnungsweite automatisch kompensiert. Folglich bleibt der Förderstrom Q bis zum Zeitpunkt 11 konstant. Auch wenn das oder die Ventile in der Praxis erst leicht zeitverzögert auf die Drehzahlreduktion reagieren, kann diese Verzögerung aufgrund des im Vergleich zur Verzögerung sehr langen Betrachtungszeitraumes (Drehzahl wird sehr langsam abgesenkt) vernachlässigt werden.

Sobald das oder die Ventile vollständig geöffnet ist/sind (Ende des Bereichs II, Zeitpunkt 11), führt ein weiteres Absenken der Drehzahl n zu einem Abfall des Förderstroms Q, d.h. der gemessene Förderstrom Q verlässt den zulässigen Grenzbereich ΔQ. Die Pumpensteuerung schaltet folglich zurück auf die ursprüngliche statische Regelkennlinie, wodurch die Drehzahl n auf ihren initialen Wert gemäß der statischen Regelkennlinie zurückgesetzt wird und auch das oder die Thermostatventile als Reaktion zu ihrer ursprünglichen Öffnungsstellung zurückkehren (Bereich III). Nach einem kurzzeitigen Ansteigen des Förderstromes Q pendelt sich dieser folglich wieder auf den konstanten Sollwert gemäß statischer Regelkennlinie ein und das Verfahren wiederholt sich mit der erneuten Überwachung des Förderstromes. Bleibt dieser erneut für die Mindestdauer t1 konstant bzw. innerhalb des Grenzbereiches ΔQ, wiederholt sich der dynamische Betrieb ab dem Zeitpunkt 12 mit der Absenkung bzw. Drehzahlreduktion (Bereich IV). Im Zeitpunkt 13 schaltet die Pumpensteuerung wiederum zurück auf die statische Regelkennlinie (Bereich V).

Die Funktionsweise des Verfahrens soll nochmals schematisch anhand der Figurendarstellung 2 veranschaulicht werden. Die dort gezeigte minimale Anlagenkennlinie 20 des Heizungssystems beschreibt den Zusammenhang zwischen der erforderlichen Förderhöhe H und dem Förderstrom Q. Neben der minimalen Anlagenkennlinie 20 ist zudem die verwendete statische Regelkennlinie 21 eingezeichnet, die einen proportionalen Zusammenhang zwischen Förderstrom Q und Förderhöhe H für die statische Regelung definiert. Der schraffierte Bereich 22 zwischen der statischen Regelkennlinie 21 und der minimalen Anlagenkennlinie 20 charakterisiert das mögliche Energieeinsparpotenzial während des Pumpenbetriebs.

Beim Umschalten auf den dynamischen Betrieb der Umwälzpumpe wird die zuvor angesprochene dynamische Absenkung der Solldrehzahl n ausgeführt, wodurch die statische Regelkennlinie prinzipiell in Richtung der Pfeile 23 verschoben und somit an die minimale Anlagenkennlinie 20 angenähert wird. Diese Annäherung erfolgt sehr langsam und kann kontinuierlich, schrittweise oder periodisch erfolgen.

Da der Förderstrom permanent überwacht wird und das System bei jeder Änderung der Anlagencharakteristik wieder auf die statische Regelkennlinie zurückspringt, ist das Verfahren sehr robust und die Gefahr negativer Effekte für den Verbraucher gering. Zudem lässt sich das erfindungsgemäße Verfahren besonders einfach implementieren und stellt keine hohen Anforderungen an die notwendige Rechenleistung der Pumpensteuerung. Es entstehen folglich keine zusätzlichen Kosten für eine zusätzliche Sensorik oder weitere Komponenten. Da dem Verfahren kein Modell zugrunde gelegt wird, muss es nicht zwingend für einen Verbraucher individuell eingestellt werden. Es kann aber möglich sein, durch individuelles Einstellen der Parameter t1 bzw. ΔQ eine weitere Optimierung zu erreichen.

Durch das erfindungsgemäße Verfahren ergibt sich für den Pumpenbetrieb ein bemerkenswertes Energieeinsparungspotenzial. Im Mittel liegt der Arbeitspunkt der Pumpe in etwa mittig zwischen statischer Regel- und Anlagenkennlinie, wodurch das vorhandene Einsparungspotenzial zu etwa 50% ausgeschöpft werden kann. Eine weitere Verbesserung ist möglich, indem die Steuerung beim Verlassen von ΔQ nicht auf die statische Regelkennlinie zurückspringt, sondern stattdessen einen Zwischenwert für die Solldrehzahl n bzw. die Ventilstellung einnimmt.

Die vorliegende Idee beinhaltet anders als der Stand der Technik keinen Lernalgorithmus, sondern es wird stattdessen erstmalig eine dynamische Regelkennlinie eingesetzt. Bei jeder Abweichung des Förderstroms vom Grenzbereich ΔQ wird die Altinformation gelöscht und das dynamische Verhalten wird erneut aufgerufen. Das dynamische Verhalten ist auch dadurch gekennzeichnet, dass neben dem Förderstrom Q selbst auch dessen zeitlicher Verlauf in die Berechnung der Solldrehzahl einfließt.

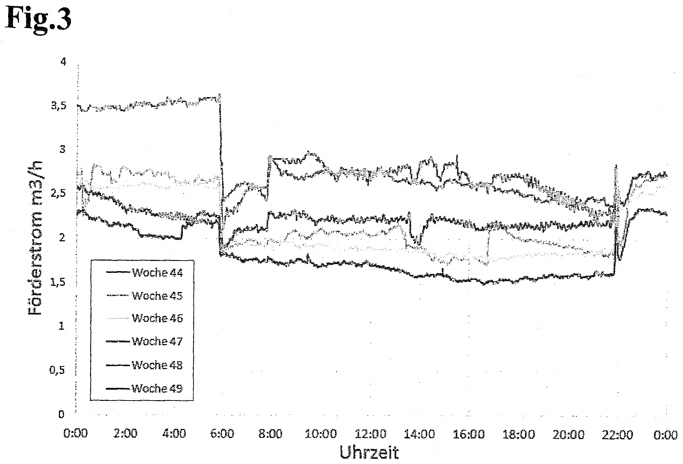

Nachfolgend soll noch auf die Einstellung der Parameter für die dynamische Regelkennlinie des erfindungsgemäßen Verfahrens eingegangen werden, d.h. die Geschwindigkeit die Drehzahlreduzierung als auch die Größe des Grenzbereichs ΔQ. Die erforderlichen Werte für die Absenkdynamik der Pumpendrehzahl hängen von dem von der Heizungsumwälzpumpe zu versorgenden Gebäude ab. Als Beispiel wird nachfolgend von einer Heizungsumwälzpumpe der Leistungsklasse 175 W ausgegangen, die ein mittleres Bürogebäude versorgen soll. Figur 3 zeigt den Verlauf der Förderströme über die Uhrzeit während sechs aufeinanderfolgender Kalenderwochen (KW44 bis 49) eines Jahres.

Der Kessel der Heizungsanlage des untersuchten Bürogebäudes verfügt über eine Nachtabsenkung. Von 5.00 Uhr bis 22.00 Uhr arbeitet der Kessel im Tagmodus, die Nachtabsenkung beginnt um 22.00 Uhr und endet um 05.00 Uhr. Während der Kessel die Medientemperatur im Nachtmodus reduziert, kühlen die Räume aus und die Thermostatventile der Heizkörper öffnen sich. Die Folge sind höhere Volumenströme während des Nachtbetriebs, was deutlich im Diagramm der Figur 3 zu erkennen ist. Gegen acht Uhr treffen typischerweise die Mitarbeiter an ihrem Arbeitsplatz ein. Ein längeres Öffnen der Haupttüren sowie das Öffnen der Fenster zum Lüften führen kurzzeitig zu erhöhtem Heizbedarf und folglich zu einem erhöhten Volumenstrom, was sich ebenfalls der Diagrammdarstellung aus Figur 3 entnehmen lässt.

Weiterhin ist erkennbar, dass die Volumenströme über den Tagesverlauf tendenziell leicht abnehmen, was mit dem Verlauf der Sonneneinstrahlung erklären lässt. Aus diesen Diagrammverläufen können die Parameter für die dynamische Regelkennlinie abgeleitet werden.

Die Bestimmung von ΔQ

Das Diagramm der Figur 3 zeigt, dass der aufgezeichnete Volumenstrom bei stabilem Betriebspunkt innerhalb seiner Grenzen $\pm 0,1$ m³/h bleibt. Um etwas Sicherheitsreserve einzuhalten, wird eine Grenze von ΔQ = $\pm 0,15$ m³/h vorgeschlagen. Bei dieser Annahme stellt sich ein konstanter Betriebspunkt für bis zu fünf Stunden ein.

Die Konfiguration der Absenkdynamik:

Bei der Absenkdynamik ist es relevant, dass die Drehzahl so langsam abgesenkt wird, dass die Thermostatventile schneller öffnen und somit die Raumtemperatur konstant halten. Die Dynamik der Ventile lässt sich sehr gut an der Stelle ableiten, an der der Kessel vom Nacht- in den Tagmodus schaltet. Um 05.00 Uhr morgens fährt der Kessel die Medientemperatur hoch. Gegen 6.00 Uhr erreicht der Förderstrom sein Tagniveau. Das bedeutet, die Thermostatventile benötigen etwa eine Stunde, um auf ein Ereignis zu reagieren. Da sich die Antwort der Heizungsventile annähernd als Tiefpass erster Ordnung beschreiben lässt, kann aus $\Delta Q$ und der Zeitkonstanten des Tiefpasses die maximal mögliche Absenkdynamik abgeleitet werden.

Vereinfacht wird jedoch die folgende Gleichung vorgeschlagen:

$$Absenkdynamik = \Delta Q \, / \, (Reaktionszeit \ der \ Ventile \, / \, 2) = 0.3 \ m^3 \, /h^2$$

Geht man von einem mittleren Förderstrom in Höhe von ca. 2 $m^3$/h aus, entspricht dies etwa einer Reduzierung der Drehzahl um 15 %. Bei der Annahme von einer Pumpendrehzahl von ca. 2000 U/min entspricht dies bei der hier angewendeten Pumpe und den hier gezeigten Betriebsverläufen einer Drehzahlabsenkung von 300 U/min pro Stunde.

## Patentansprüche

1. Verfahren zur Regelung einer Umwälzpumpe mit variabler Drehzahl in einer hydraulischen Anlage, insbesondere in einer Heizungsanlage, wobei das Verfahren umfasst:

   i. Regelung der Drehzahl der Umwälzpumpe gemäß einer gespeicherten statischen Regelkennlinie,
   ii. Erkennen ob ein stationärer Betriebspunkt der hydraulischen Anlage vorliegt,
   iii. Wenn ein stationärer Betriebspunkt vorliegt, Umschalten des Pumpenbetriebes auf eine dynamische Regelkennlinie.

2. Verfahren nach Anspruch 1, **dadurch gekennzeichnet, dass** von der dynamischen Regelkennlinie zurück auf die statische Regelkennlinie umgeschaltet wird, falls der Förderstrom der Pumpe unter einen definierten Grenzwert abfällt oder aus einem definierten Grenzbereich herausfällt.

3. Verfahren nach Anspruch 2, **dadurch gekennzeichnet, dass** der Grenzwert und/oder Grenzbereich des Förderstromes durch den im erkannten stationären Betriebspunkt vorliegenden Förderstrom der Pumpe definiert ist, insbesondere zuzüglich einer tolerierbaren Abweichung.

4. Verfahren nach einem der vorhergehenden Ansprüche, **dadurch gekennzeichnet, dass** die dynamische Regelkennlinie auf einer dynamischen Absenkung der Pumpendrehzahl basiert, wobei die Absenkung beispielsweise kontinuierlich, stufenartig oder periodisch erfolgt.

5. Verfahren nach Anspruch 4, **dadurch gekennzeichnet, dass** mittels der Drehzahlabsenkung der Umwälzpumpe ein Öffnen der ein oder mehrere Thermostatventile in einem Heizungssystem erzwungen wird, wodurch die aktuelle Anlagenkennlinie einer minimalen Anlagenkennlinie mit vollständig geöffneten Thermostatventilen angenähert wird.

6. Verfahren nach einem der Ansprüche 2 bis 5, **dadurch gekennzeichnet, dass** beim Umschalten der Pumpe auf die statische Regelkennlinie die Drehzahländerung zurückgenommen wird.

7. Verfahren nach einem der vorhergehenden Ansprüche, **dadurch gekennzeichnet, dass** ein stationärer Betriebspunkt der hydraulischen Anlage dadurch erkannt wird, wenn der bestimmte, insbesondere gemessene Förderstrom für eine definierte Zeitdauer t innerhalb eines definierten Bereichs $\Delta Q$ des Förderstromes liegt, wobei der Bereich $\Delta Q$ dem definierten Grenzbereich entspricht.

8. Verfahren nach Anspruch 7, **dadurch gekennzeichnet, dass** das Messsignal des Förderstroms mit einem Tiefpassfilter erster Ordnung gefiltert wird.

9. Verfahren nach Anspruch 7 oder 8, **dadurch gekennzeichnet, dass** die Zeitdauer t sowie der Bereich $\Delta Q$ manuell und/oder automatisch änderbar ist.

**10.** Verfahren nach einem der vorhergehenden Ansprüche, **dadurch gekennzeichnet, dass** die Steuerung auf einen Zwischenwert für die Drehzahl zurückspringt, falls der Förderstrom unter einen definierten Grenzwert abfällt oder aus dem definierten Grenzbereich herausfällt, wobei der Zwischenwert der Drehzahl zwischen der Drehzahl der statischen Regelkennlinie und dem zuletzt eingestellten Drehzahlwert liegt.

**11.** Drehzahl-regelbare Umwälzpumpe, insbesondere Heizungsumwälzpumpe, mit einer integrierten Steuerung, einer Speichervorrichtung zum Speichern von Regelkennlinien und einer Vorrichtung zur Erkennung eines Betriebspunktes, **dadurch gekennzeichnet, dass** die Steuerung konfiguriert ist, in der Pumpe ein Verfahren nach einem der vorhergehenden Ansprüche auszuführen.

**Claims**

**1.** Method for controlling a circulation pump having variable rotational speed in a hydraulic system, in particular in a heating system, wherein the method comprises:

> i. control of the rotational speed of the circulation pump according to a stored static control characteristic curve,
> ii. detection of whether a steady-state operating point of the hydraulic system exists,
> iii. if a steady-state operating point exists, switching of the pump operation to a dynamic control characteristic curve.

**2.** Method according to Claim 1, **characterized in that** the pump operation is switched back from the dynamic control characteristic curve to the static control characteristic curve if the delivery rate of the pump falls below a defined limit value or out of a defined limit range.

**3.** Method according to Claim 2, **characterized in that** the limit value and/or limit range of the delivery rate are/is defined by the delivery rate of the pump that exists at the detected steady-state operating point, in particular plus a tolerable variance.

**4.** Method according to one of the preceding claims, **characterized in that** the dynamic control characteristic curve is based on a dynamic fall in the pump rotational speed, wherein the fall takes place for example continuously, in steps or periodically.

**5.** Method according to Claim 4, **characterized in that** the fall in rotational speed of the circulation pump is used to force the one or more thermostatic valves in a heating system to open, as a result of which the present system characteristic curve is brought closer to a minimum system characteristic curve with fully opened thermostatic valves.

**6.** Method according to one of Claims 2 to 5, **characterized in that** when the pump is switched to the static control characteristic curve, the change in rotational speed is reversed.

**7.** Method according to one of the preceding claims, **characterized in that** a steady-state operating point of the hydraulic system is detected if the specific, in particular measured delivery rate lies within a defined range $\Delta Q$ of the delivery rate for a defined period of time t, wherein the range $\Delta Q$ corresponds to the defined limit range.

**8.** Method according to Claim 7, **characterized in that** the measurement signal relating to the delivery rate is filtered using a first-order low-pass filter.

**9.** Method according to Claim 7 or 8, **characterized in that** the period of time t and the range $\Delta Q$ can be changed manually and/or automatically.

**10.** Method according to one of the preceding claims, **characterized in that** the controller reverts to an intermediate value for the rotational speed if the delivery rate falls below a defined limit value or out of the defined limit range, wherein the intermediate value of the rotational speed lies between the rotational speed of the static control characteristic curve and the last rotational speed value that was set.

**11.** Rotational-speed-controllable circulation pump, in particular heating circulation pump, with an integrated controller, a storage apparatus for storing control characteristic curves, and an apparatus for detecting an operating point, **characterized in that** the controller is configured to carry out a method according to one of the preceding claims in the pump.

**Revendications**

1. Procédé de régulation d'une pompe de circulation à vitesse de rotation variable dans un système hydraulique, notamment dans un système de chauffage, le procédé comprenant les étapes suivantes :

   i. réguler la vitesse de rotation de la pompe de circulation selon une caractéristique de régulation statique en mémoire,
   ii. détecter la présence d'un point de fonctionnement stationnaire du système hydraulique,
   iii. en cas de présence d'un point de fonctionnement stationnaire, commuter le fonctionnement de la pompe sur une caractéristique de régulation dynamique.

2. Procédé selon la revendication 1, **caractérisé en ce qu'**une commutation de la caractéristique de régulation dynamique à la caractéristique de régulation statique est effectuée si le débit de la pompe tombe au-dessous d'une valeur limite définie ou en dehors d'une zone limite définie.

3. Procédé selon la revendication 2, **caractérisé en ce que** la valeur limite et/ou la zone limite du débit est/sont définie(s) par le débit de la pompe présente au point de fonctionnement stationnaire détecté, notamment majoré d'un écart tolérable.

4. Procédé selon l'une des revendications précédentes, **caractérisé en ce que** la caractéristique de régulation dynamique est basée sur une réduction dynamique de la vitesse de rotation de la pompe, la réduction étant réalisée par exemple de manière continue, par paliers ou de manière périodique.

5. Procédé selon la revendication 4, **caractérisé en ce que** l'ouverture d'une ou plusieurs vannes thermostatiques d'un système de chauffage est forcée par réduction de la vitesse de rotation de la pompe de circulation de sorte que la caractéristique actuelle du système est approchée d'une caractéristique minimale du système avec une ouverture complète des vannes thermostatiques.

6. Procédé selon l'une des revendications 2 à 5, **caractérisé en ce que**, lors de la commutation de la pompe sur la caractéristique de régulation statique, la variation de vitesse de rotation est réduite.

7. Procédé selon l'une des revendications précédentes, **caractérisé en ce qu'**un point de fonctionnement stationnaire du système hydraulique est détecté lorsque le débit déterminé, notamment mesuré, est dans une gamme définie $\Delta Q$ du débit pendant une durée définie t, la gamme $\Delta Q$ correspondant à la zone limite définie.

8. Procédé selon la revendication 7, **caractérisé en ce que** le signal de mesure du débit est filtré avec un filtre passe-bas du premier ordre.

9. Procédé selon la revendication 7 ou 8, **caractérisé en ce que** la durée t et la plage $\Delta Q$ peuvent être modifiées manuellement et/ou automatiquement.

10. Procédé selon l'une des revendications précédentes, **caractérisé en ce que** la commande repasse à une valeur intermédiaire de la vitesse de rotation si le débit tombe au-dessous d'une valeur limite définie ou en dehors de la zone limite définie, la valeur intermédiaire de la vitesse de rotation étant située entre la vitesse de rotation de la caractéristique de régulation statique et la dernière valeur de vitesse de rotation réglée.

11. Pompe de circulation à vitesse de rotation réglable, en particulier de circulation de chauffage, comprenant une commande intégrée, un dispositif de mémorisation destiné à mémoriser des caractéristiques de régulation et un dispositif de détection d'un point de fonctionnement, **caractérisé en ce que** la commande est configurée pour mettre en œuvre dans la pompe un procédé selon l'une des revendications précédentes.

# Fig.1

a) Förderstrom Q

I | II | III | IV | V

ΔQ

t1

t1

b) Solldrehzahl

c) Absenkung

d) Ventilstellung

**Fig.2**

# Fig.3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102011012211 A1
- EP 3026352 A1